# DEMANDE DE BREVET EUROPEEN

(11) **EP 3 682 754 A1**
(43) Date de publication de la demande: **22.07.2020**
(21) Numéro de dépôt: 20152655.5
(22) Date de dépôt: 20.01.2020
(51) Int. Cl.: A43B 3/16, B29D 35/00, B29D 35/02, B29D 35/12

(54) **SUR-CHAUSSURE ET PROCÉDÉ DE FABRICATION D'UNE TELLE SUR-CHAUSSURE**

(30) Priorité: 21.01.2019 FR 1900485
(71) Demandeur: Etché Securité, 64130 Viodos Abense-de-Bas (FR)
(72) Inventeur: ETCHEGOYHEN, Pierre François Bernard, 64130 Mauléon (FR)
(74) Mandataire: Fantin, Laurent

(57) **Abrégé**

L'invention a pour objet une sur-chaussure comprenant :
- une semelle (32),
- une tige (34) qui présente une partie supérieure tubulaire (38) configurée pour occuper une première position déployée, dans laquelle elle présente une section élargie permettant l'introduction d'un pied chaussé à l'intérieur de la sur-chaussure (30) et une deuxième position resserrée dans laquelle elle présente une section réduite de sorte à être sensiblement plaquée contre la partie basse de la jambe de l'utilisateur,
- au moins un système de serrage (54), configuré pour maintenir la partie supérieure tubulaire (38) dans la position resserrée, qui comprend des première et deuxième attaches (56, 58) configurées de manière à ce que leurs zones de liaison soient positionnées, à l'état attaché, au niveau d'au moins l'une des parties avant et arrière (44, 44') de la tige (34).

## Description

La présente demande se rapporte à une sur-chaussure ainsi qu'à un procédé de fabrication d'une telle sur-chaussure.

Une botte en caoutchouc est en général constituée d'une semelle et d'une tige, cette dernière étant usuellement en un matériau adapté et d'épaisseur assez uniforme pour assurer la protection de l'utilisateur, tout en apportant une certaine rigidité à l'ensemble de la botte pour qu'au moins celle-ci ne se déforme pas sous son propre poids.

Selon un mode de réalisation connu, une botte (ou une sur-chaussure) en caoutchouc est réalisée par confection, en positionnant des éléments prédécoupés dans une plaque en caoutchouc sur une forme puis en les vulcanisant dans un autoclave.

Selon un autre mode de réalisation connu, les bottes (ou les sur-chaussures) en caoutchouc ou en élastomère sont moulées par injection.

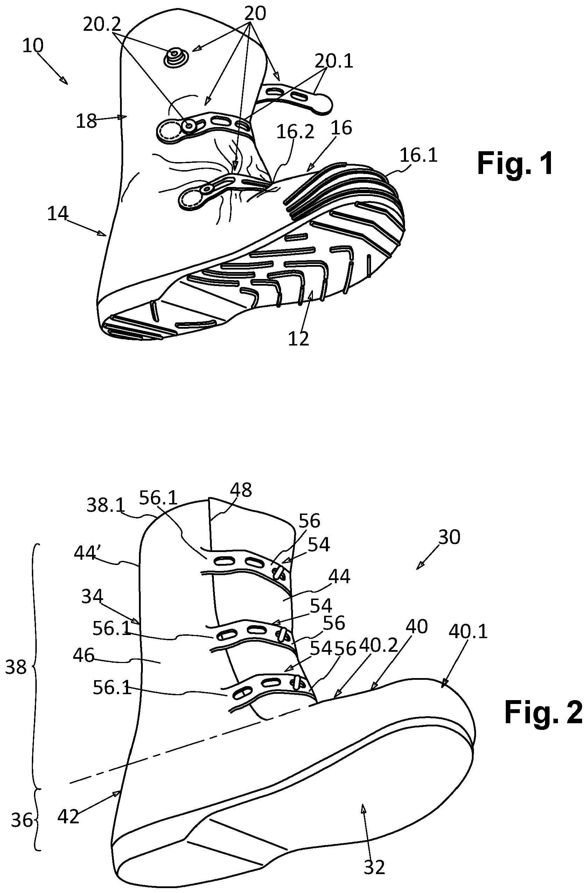

La figure 1 illustre une sur-chaussure pour une tenue NBC (Nucléaire, Biologique, Chimique) également décrite dans le document WO2014134715. Cette sur-chaussure 10 comprend une semelle 12, ainsi qu'une tige 14 qui recouvre la chaussure et la partie basse de la jambe. Cette tige 14 comprend notamment une partie avant 16 (appelée empeigne) qui s'étend de la pointe avant 16.1 de la botte jusqu'à un cou-de-pied 16.2 (positionné à l'avant du pied au niveau de la cheville) et une partie supérieure tubulaire 18 configurée pour envelopper la partie basse de la jambe.

Selon un mode de réalisation, la sur-chaussure 10 est réalisée à partir de plusieurs couches dont une en élastomère obtenue par moulage.

Dans le cas d'une sur-chaussure, le cou-de-pied 16.2 et la partie supérieure tubulaire 18 ont une section élargie pour permettre l'insertion d'un pied chaussé dans la sur-chaussure.

Pour maintenir la sur-chaussure en place, des systèmes de serrage 20 sont prévus au niveau de la partie supérieure tubulaire 18 pour la serrer autour de la partie basse de la jambe. En complément, la sur-chaussure 10 est réalisée en un matériau et/ou présente une épaisseur lui permettant de se plier aisément.

Selon une configuration visible sur la figure 1, la sur-chaussure 10 comprend trois systèmes de serrage 20 répartis sur la hauteur de la partie supérieure tubulaire 18. Chaque système de serrage 20 comprend :
- une attache 20.1 qui présente une première extrémité reliée à un premier côté de la partie supérieure tubulaire 18 et qui comprend plusieurs trous répartis sur sa longueur,
- un bouton 20.2 positionné sur un deuxième côté de la partie tubulaire 18 et configuré pour coopérer avec l'un des trous de l'attache 20.1.

Selon un mode de réalisation, le bouton 20.2 comprend un insert, métallique ou en polymère, surmoulé.

Ce mode de réalisation n'est pas pleinement satisfaisant car le surmoulage d'un insert complexifie le procédé de fabrication. Par ailleurs, il est nécessaire de correctement plier la sur-longueur de la partie tubulaire 18 entre l'attache 20.1 et le bouton 20.2 de chaque système de serrage 20 pour éviter que cette sur-longueur n'empêche l'insertion du bouton 20.2 dans l'un des trous de l'attache 20.1.

Le document US20140096410 décrit une sur-chaussure qui présente une attache sous la forme d'une bande de matière, distincte de la sur-chaussure, pour resserrer sa partie supérieure tubulaire. Cette attache passe par un guide rapporté sur un premier côté de la partie supérieure tubulaire et présente un système de fermeture positionné au niveau du deuxième côté de la partie supérieure tubulaire. La présence du guide et du système de fermeture sur les côtés de la partie supérieure tubulaire peut constituer une entrave. Selon ce document, la sur-longueur de la partie supérieure tubulaire comprend, de manière symétrique, des angles rentrants et des angles saillants qui sont agencés de manière à générer des formes en contredépouille ce qui complexifie la fabrication par moulage ou par confection.

Dans le domaine des bottes, on connait d'après le document US1564429 une botte comportant une partie supérieure tubulaire qui présente des angles rentrants et saillants pour obtenir une sur-longueur. La botte comprend de part et d'autre de la partie supérieure tubulaire des première et deuxième bandes de matière triangulaires qui s'étendent à partir du sommet des angles saillants et plusieurs systèmes de fermeture positionnés au niveau des bords libres des première et deuxième bandes de matière. Chaque système de fermeture comprend une première partie métallique solidaire de la première bande de matière, pivotante par rapport à cette dernière, qui présente plusieurs trous oblongs orientés verticalement ainsi qu'une deuxième partie métallique solidaire de la deuxième bande de matière, pivotante par rapport à cette dernière, qui comprend un crochet configuré pour coopérer dans l'un des trous oblongs de la première partie. Ces systèmes de fermeture sont rapportés et ne peuvent pas être réalisés par moulage avec le reste de la botte ce qui complexifie la fabrication de la botte. De plus, la configuration des angles rentrants et saillants génère des formes en contredépouille ce qui complexifie la fabrication par moulage ou par confection.

La présente invention vise à remédier à tout ou partie des inconvénients de l'art antérieur. A cet effet, l'invention a pour objet une sur-chaussure comprenant une semelle, une tige qui présente une partie supérieure tubulaire, configurée pour envelopper une partie basse d'une jambe et pour occuper une première position déployée dans laquelle la partie supérieure tubulaire présente une section élargie et une deuxième position resserrée dans laquelle la partie supérieure tubulaire présente une section réduite, ladite sur-chaussure comprenant également au moins un système de serrage configuré pour maintenir la partie supérieure tubulaire dans la position resserrée.

Selon l'invention, chaque système de serrage comprend une première attache présentant une première extrémité reliée à l'une des parties latérales droite ou gauche de la partie supérieure tubulaire et une deuxième attache présentant une première extrémité reliée à l'autre partie latérale gauche ou droite de la partie supérieure tubulaire, les première et deuxième attaches étant configurées pour occuper un état attaché dans lequel elles sont reliées et maintiennent la sur-chaussure dans la position resserrée et un état détaché dans lequel elles ne sont pas reliées, les première et deuxième attaches étant configurées pour que leurs zones de liaison soient positionnées, à l'état attaché, au niveau d'au moins l'une des parties avant et arrière de la tige.

Selon une autre caractéristique, les première et deuxième attaches de chaque système de serrage sont réalisées d'un seul tenant avec la partie supérieure tubulaire. Ainsi, les premières et deuxième attaches ne sont pas rapportées sur la partie supérieure tubulaire. Selon une autre caractéristique, la partie supérieure tubulaire comprend au moins deux lignes de pliage préformées, une première ligne de pliage formant un angle saillant et une deuxième ligne de pliage formant un angle rentrant, les première et deuxième lignes de pliage s'étendant d'une extrémité haute de la partie supérieure tubulaire sur toute la hauteur de la partie supérieure tubulaire, les première et deuxième lignes de pliage délimitant une sur-longueur permettant à la sur-chaussure d'occuper alternativement la position déployée et la position resserrée.

Selon un agencement, les première et deuxième lignes de pliage sont positionnées dans la moitié avant de la partie supérieure tubulaire, la première ligne de pliage formant un angle saillant étant plus proche d'une génératrice avant, en suivant le pourtour de la partie supérieure tubulaire, que la deuxième ligne de pliage formant un angle rentrant.

Cette configuration permet de pouvoir réaliser la sur-chaussure sans contredépouille ce qui simplifie le moule.

Selon une autre caractéristique, la sur-chaussure comprend une première ligne de pliage droite formant un angle saillant et une deuxième ligne de pliage droite formant un angle rentrant positionnées d'un premier côté d'un plan médian vertical, ainsi qu'une première ligne de pliage gauche formant un angle saillant et une deuxième ligne de pliage gauche formant un angle rentrant positionnées d'un deuxième côté du plan médian vertical, les premières lignes de pliage formant les angles saillants étant plus proches de la génératrice avant, en suivant le pourtour de la partie supérieure tubulaire, que les deuxième lignes de pliage formant les angles rentrants.

D'autres caractéristiques et avantages ressortiront de la description de l'invention qui va suivre, description donnée à titre d'exemple uniquement, en regard des dessins annexés parmi lesquels :
- La figure 1 est une vue en perspective d'une sur-chaussure qui illustre un mode de réalisation de l'art antérieur,
- La figure 2 est une vue en perspective d'une sur-chaussure qui illustre un mode de réalisation de l'invention à l'état attaché,
- La figure 3 est une coupe horizontale de la sur-chaussure visible sur la figure 2 à l'état attaché,
- La figure 4 est une vue en perspective de la sur-chaussure visible sur la figure 2 à l'état détaché,
- La figure 5 est une coupe horizontale de la sur-chaussure visible sur la figure 2 à l'état détaché,
- La figure 6 est une vue de face d'un système de serrage qui illustre un premier mode de réalisation de l'invention,
- La figure 7 est une vue de face d'un système de serrage qui illustre un deuxième mode de réalisation de l'invention,
- La figure 8 est une coupe verticale d'un moule à l'état fermé qui illustre un mode de réalisation de l'invention,
- La figure 9 est une coupe horizontale selon un plan P1 de la figure 8 du moule à l'état fermé,
- La figure 10 est une coupe horizontale selon le plan P1 de la figure 8 du moule à l'état ouvert,
- La figure 11 est une coupe horizontale selon un plan P2 de la figure 8 du moule à l'état fermé avec un agrandissement par rapport aux figures 8 à 10.

Sur les figures 2 à 5, on a représenté une sur-chaussure 30 qui présente une semelle 32 et une tige 34.

La tige 34 présente une partie inférieure 36 configurée pour envelopper un pied chaussé (d'une chaussure ou d'une botte) et une partie supérieure tubulaire 38 configurée pour envelopper une partie basse de la jambe.

La partie inférieure 36 comprend une empeigne 40 (positionnée au-dessus du pied) qui s'étend d'une pointe avant 40.1 (correspondant à l'extrémité du pied) jusqu'à un cou-de-pied 40.2 (correspondant à la cheville). La partie inférieure 36 comprend un contrefort 42 positionné à l'arrière du talon du pied.

Pour la suite de la description, les notions « avant » et « arrière » font référence à la pointe avant du pied et au talon, une partie avant étant orientée vers la pointe avant du pied et une partie arrière étant orientée vers le talon, une partie avant étant plus proche de la pointe avant du pied qu'une partie arrière.

Une génératrice correspond à une intersection entre un plan vertical et la partie supérieure tubulaire 38. Selon une configuration, la sur-chaussure 30 présente un plan médian vertical PMV passant par la génératrice située la plus à l'avant de la partie supérieure tubulaire 38, appelée génératrice avant, et par la génératrice située la plus à l'arrière de la partie supérieure tubulaire 38, appelée génératrice arrière.

La partie supérieure tubulaire 38 comprend une partie avant 44 qui s'étend d'une extrémité haute 38.1 de la partie supérieure tubulaire 38 jusqu'au cou-de-pied 40.2 et une partie arrière 44' qui s'étend de l'extrémité haute 38.1 jusqu'au contrefort 42. En vue de dessus, la partie avant 44 correspond à une partie de la moitié avant de la partie supérieure 38 et la partie arrière 44' à une partie de la moitié arrière. Les parties avant et arrière 44, 44' sont reliées par des parties latérales droite et gauche 46, 46'.

Selon un mode de réalisation, la tige 34 est réalisée, au moins en partie, en une matière et/ou présente une épaisseur lui conférant une certaine rigidité pour que la sur-chaussure ne se déforme pas sous son propre poids. Cette matière et/ou cette épaisseur lui permet(tent) cependant de se déformer autour de lignes de pliage préformées sur la tige 34, comme cela sera expliqué ultérieurement.

Bien entendu, l'invention n'est pas limitée à ce mode de réalisation. Ainsi, la tige 34 pourrait être réalisée, au moins en partie, en une matière et/ou présente une épaisseur lui conférant beaucoup de souplesse de façon à réduire son poids et son volume de stockage.

Selon une caractéristique de l'invention, la tige 34 est réalisée en caoutchouc.

Selon une première variante, toute la tige 34 est réalisée en une seule matière et/ou présente la même épaisseur sur toute sa surface.

Selon d'autres variantes, la tige peut comprendre des zones aptes à se déformer de manière élastique pour permettre l'introduction d'un pied chaussé (d'une chaussure ou d'une botte), comme par exemple l'avant et/ou l'arrière de la partie supérieure tubulaire 38 et/ou le cou-de-pied 40.2 et/ou le contrefort 42, et d'autres zones plus rigides et éventuellement renforcées, comme par exemple la pointe avant 40.1.

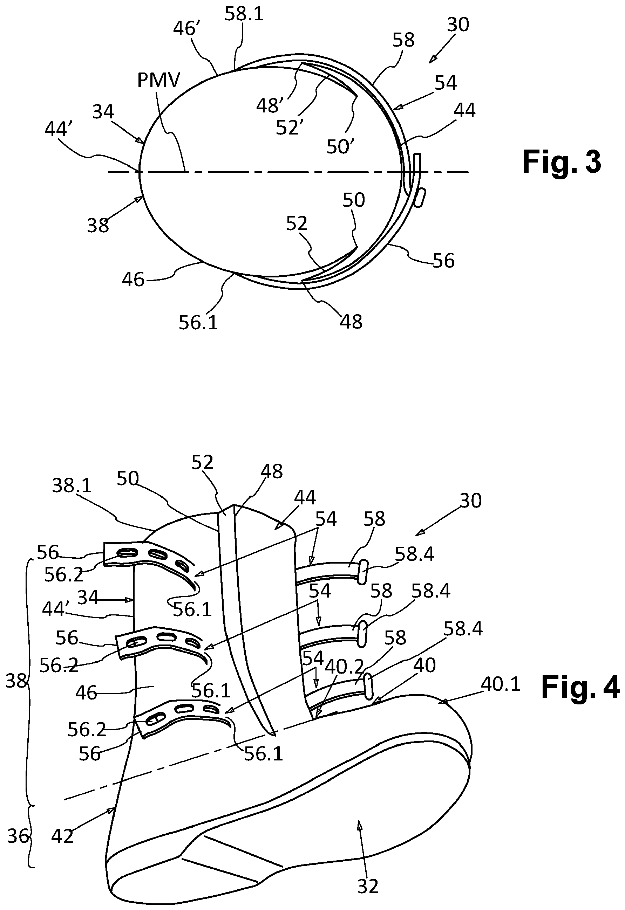

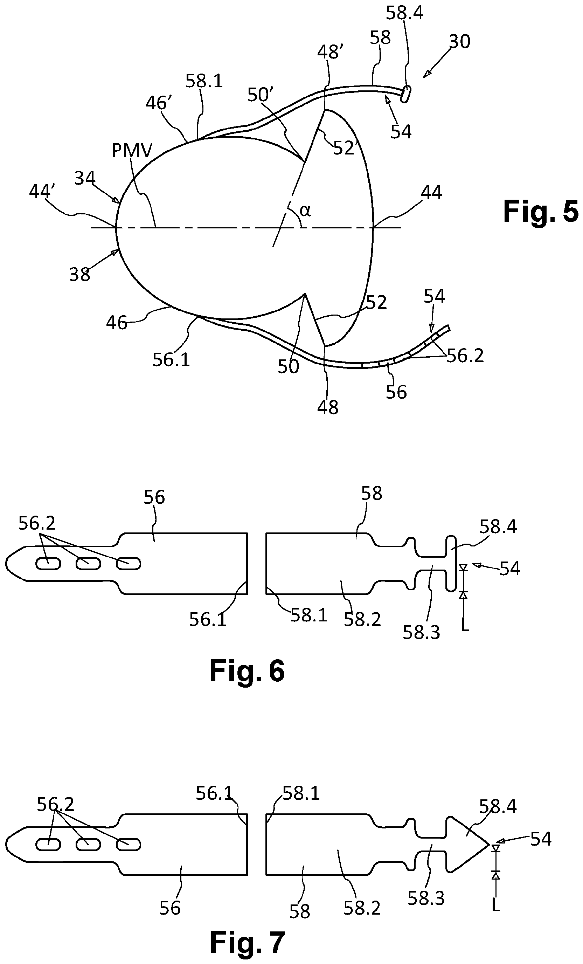

Selon une caractéristique de l'invention, la partie supérieure tubulaire 38 comprend au moins deux lignes de pliage préformées 48, 50, une première ligne de pliage 48 formant un angle saillant et une deuxième ligne de pliage 50 formant un angle rentrant, lui permettant d'occuper une première position déployée, visible sur la figure 5, dans laquelle elle présente une section élargie permettant l'introduction d'un pied chaussé à l'intérieur de la sur-chaussure 30 et une deuxième position resserrée, visible sur la figure 3, dans laquelle elle présente une section réduite (inférieure à la section élargie) de sorte à être sensiblement plaquée contre la partie basse de la jambe de l'utilisateur.

Les première et deuxième lignes de pliage 48, 50 s'étendent de l'extrémité haute 38.1 de la partie supérieure tubulaire 38, sur toute la hauteur de la partie supérieure tubulaire 38, et se prolongent éventuellement au niveau de la partie inférieure 36, notamment au niveau du cou-de-pied 40.2 et/ou du contrefort 42.

Selon une configuration, la partie supérieure tubulaire 38 comprend, depuis la génératrice avant, de l'avant vers l'arrière, en suivant le pourtour de la partie supérieure tubulaire 38, une première ligne de pliage 48 formant un angle saillant et une deuxième ligne de pliage 50 formant un angle rentrant. Cette configuration permet d'éviter les formes en contredépouille. Les première et deuxième lignes de pliage 48, 50 sont positionnées dans la moitié avant de la partie supérieure tubulaire 38.

La zone entre les première et deuxième lignes de pliage 48, 50 forme une sur-longueur 52 qui permet à la sur-chaussure de passer de la position déployée à la position resserrée.

Selon un mode de réalisation visible sur les figures 2 à 5, la sur-chaussure 30 comprend, depuis la génératrice avant, de l'avant vers l'arrière, en suivant le pourtour de la partie supérieure tubulaire 38, une première ligne de pliage droite 48 formant un angle saillant et une deuxième ligne de pliage droite 50 formant un angle rentrant positionnées d'un premier côté du plan médian vertical PMV, ainsi qu'une première ligne de pliage gauche 48' formant un angle saillant et une deuxième ligne de pliage gauche 50' formant un angle rentrant positionnées d'un deuxième côté du plan médian vertical PMV.

Comme illustré sur la figure 3, la zone entre les première et deuxième lignes de pliage droites 48, 50 forme une sur-longueur droite 52 et la zone entre les première et deuxième lignes de pliage gauches 48', 50' forme une sur-longueur gauche 52'.

L'espacement entre les première et deuxième lignes droites 48, 50 est sensiblement égal à celui prévu entre les première et deuxième lignes gauche 48', 50'. De préférence, les lignes de pliage droites 48, 50 et les lignes de pliage gauches 48', 50' sont sensiblement verticales et symétriques par rapport au plan médian vertical PMV.

Les première et deuxième lignes droites 48, 50 et les première et deuxième lignes gauche 48', 50' étant positionnées de manière symétrique par rapport au plan médian vertical PMV et la distance qui sépare les premières lignes de pliage droite et gauche 48, 48' étant plus grande que la distance qui sépare les deuxièmes lignes de pliage droite et gauche 50, 50' à l'état déployée (visible sur la figure 5), les sur-longueurs droite et gauche 52, 52' sont plaquées contre la surface extérieure de la partie supérieure tubulaire 38 dans la position resserrée.

Selon une autre caractéristique, chaque sur-longueur droite ou gauche 52, 52' forme, à l'état repos (non déformé élastiquement), avec le plan médian vertical PMV un angle α inférieur ou égal à 90°. Cette configuration permet de simplifier le procédé de moulage en évitant les formes en contredépouille. L'angle α doit être supérieur à 45° pour faciliter le pliage.

Selon un mode de réalisation, l'état repos de la sur-chaussure 30 correspond à une position intermédiaire entre les positions déployée et resserrée. Bien entendu l'invention n'est pas limitée à ce mode de réalisation.

Selon une première variante visible sur les figures 2 à 5, les lignes de pliage 48, 48', 50, 50' sont positionnées au niveau de la partie avant 44 de la partie supérieure tubulaire 38.

Selon une autre variante, les lignes de pliage 48, 48', 50, 50' pourraient être positionnées au niveau de la partie arrière 44' de la partie supérieure tubulaire 38.

Selon une autre variante, des lignes de pliage 48, 48', 50, 50' pourraient être positionnées au niveau de la partie avant 44 et d'autres lignes de pliage pourraient être positionnées au niveau de la partie arrière 44'.

Selon une autre caractéristique de l'invention, la partie avant 44 située entre les premières lignes de pliage droite et gauche 48, 48' comporte une épaisseur supérieure de 20% à 100% à celle du reste de la tige 34 (constituée des parties 44', 46, 46', 52, 52') de façon à ce que la partie avant 44 vienne bien recouvrir les sur-longueurs droite et gauche 52 et 52' lors du serrage de la sur-chaussure et non l'inverse.

La sur-chaussure 30 comprend au moins un système de serrage 54 configuré pour maintenir la sur-chaussure dans la position resserrée.

Comme illustré sur les figures 2 et 4, la sur-chaussure 30 comprend plusieurs systèmes de serrage 54, (selon l'exemple trois) répartis sur la hauteur de la partie supérieure tubulaire 38.

Selon un mode de réalisation visible sur les figures 2 à 5, chaque système de serrage comprend une première attache 56 présentant une première extrémité 56.1 reliée à l'une des parties latérales droite ou gauche 46, 46' et une deuxième attache 58 présentant une première extrémité 58.1 reliée à l'autre partie latérale gauche ou droite 46, 46', les première et deuxième attaches 56, 58 étant configurées pour occuper un état attaché dans lequel elles sont reliées et maintiennent la sur-chaussure 30 dans la position resserrée et un état détaché dans lequel elles ne sont pas reliées. Ainsi, lorsque les première et deuxième attaches 56, 58 ne sont plus reliées, la sur-chaussure 30 peut revenir dans la position repos grâce à la mémoire de forme de la sur-chaussure 30 ou elle peut se déformer ou être déformée de manière élastique dans la position déployée lors de l'insertion d'un pied chaussé.

Pour la présente demande, on entend par attache une bande de matière qui comprend une première extrémité reliée à la tige 34, plus particulièrement à la partie supérieure tubulaire 38, et une zone de liaison avec une autre attache distante de la première extrémité pour que les zones de liaison des deux attaches reliées soient positionnées à l'état attaché au niveau d'au moins l'une des parties avant et arrière 44, 44' de la tige 34. Ainsi, si les lignes de pliage 48, 48', 50, 50' sont positionnées au niveau de la partie avant 44 de la partie supérieure tubulaire 38, les zones de liaison des attaches 56, 58 sont positionnées au niveau de la partie avant 44 de la tige 34, comme sur les figures 2 et 3. Si les lignes de pliage 48, 48', 50, 50' sont positionnées au niveau de la partie arrière 44' de la partie supérieure tubulaire 38, les zones de liaison des attaches 56, 58 sont positionnées au niveau de la partie arrière 44' de la tige 34. Si des lignes de pliage 48, 48', 50, 50' sont positionnées au niveau de la partie avant et arrière 44, 44' de la partie supérieure tubulaire 38, les zones de liaison des attaches 56, 58 sont positionnées au niveau de la partie avant et arrière 44, 44' de la tige 34.

Selon un mode de réalisation, toutes les premières et deuxièmes attaches 56, 58 sont réalisées d'un seul tenant avec le reste de la sur-chaussure 30, plus particulièrement avec la partie supérieure tubulaire 38. Ainsi, les premières et deuxièmes attaches 56, 58 ne sont pas rapportées sur la partie supérieure tubulaire 38. Les premières et deuxièmes attaches 56, 58 ainsi que la partie supérieure tubulaire 38 sont réalisées dans la même matière, lors de la même opération de moulage.

Les premières et deuxièmes attaches 56, 58 sont reliées à la partie supérieure tubulaire 38 en un point décalé par rapport aux première et deuxième lignes de de pliage 48, 48', 50, 50'. Selon une configuration, chacune des premières et deuxièmes attaches se présente sous la forme d'une bande de matière qui présente une largeur (dimension prise selon une direction perpendiculaire à la direction allant de la première extrémité à la deuxième extrémité) inférieure ou égale 4 cm.

Selon un mode de réalisation, la première attache 56 comprend au moins un trou 56.2 traversant. Selon une configuration, la première attache 56 comprend plusieurs trous 56.2 répartis sur sa longueur. Chaque trou 56.2 a une forme oblongue qui présente une grande dimension orientée selon la longueur de la première attache 56, approximativement horizontale. Le fait de prévoir plusieurs trous 56.2 permet de pouvoir ajuster la section de la partie supérieure tubulaire 38 à différents utilisateurs.

La deuxième attache 58 comprend, de la première extrémité vers la deuxième extrémité, un corps 58.2, une section réduite 58.3 et une tête 58.4. La tête 14 peut être cylindrique, comme illustré sur la figure 6, triangulaire, comme illustré sur la figure 7 ou avoir toute autre une forme.

La section réduite 58.3 présente une section inférieure ou égale à la plus petite section des trous 56.2 de la première attache 56. La tête 58.4 a une largeur (dimension prise selon une direction perpendiculaire à la longueur de la deuxième attache 58) supérieure à la plus petite section des trous 56.2 de la première attache 56 pour maintenir les première et deuxième attaches 56 et 58 attachées.

Selon une caractéristique de l'invention, la tête 58.4 présente un débordement de part et d'autre de la section réduite 58.3 avec une dimension L supérieure ou égale à 5 mm. Cette configuration permet d'obtenir une liaison résistante entre les première et deuxième attaches 56, 58.

Selon une caractéristique de l'invention, la tige 34 est sensiblement symétrique par rapport au plan médian vertical PMV. Le fait de prévoir une semelle 32 et une tige 34 symétriques par rapport au plan médian vertical PMV permet d'obtenir une sur-chaussure 30 ambidextre. Selon l'invention, quel que soit le pied droit ou gauche, les systèmes de serrage 54 sont positionnés au niveau des parties avant et/ou arrière 44, 44' et non sur les parties latérales droite et gauche 46, 46'.

Selon une autre caractéristique de l'invention, la sur-chaussure 30 est obtenue par moulage par injection. Ce mode opératoire permet d'obtenir un coût de revient inférieur à celui obtenu par un procédé de fabrication par confection.

Un moule 60 est utilisé pour le moulage par injection.

Ce moule 60 comprend deux demi-moules 62, 64 plaqués l'un contre l'autre au niveau d'un plan de joint principal 66 correspondant au plan médian vertical PMV de la sur-chaussure 30. Le moule 60 comprend également au moins un noyau 80 qui est conformé comme l'intérieur de la sur-chaussure 30 à réaliser et qui est intercalé entre les deux demi-moules 62, 64 lors du moulage.

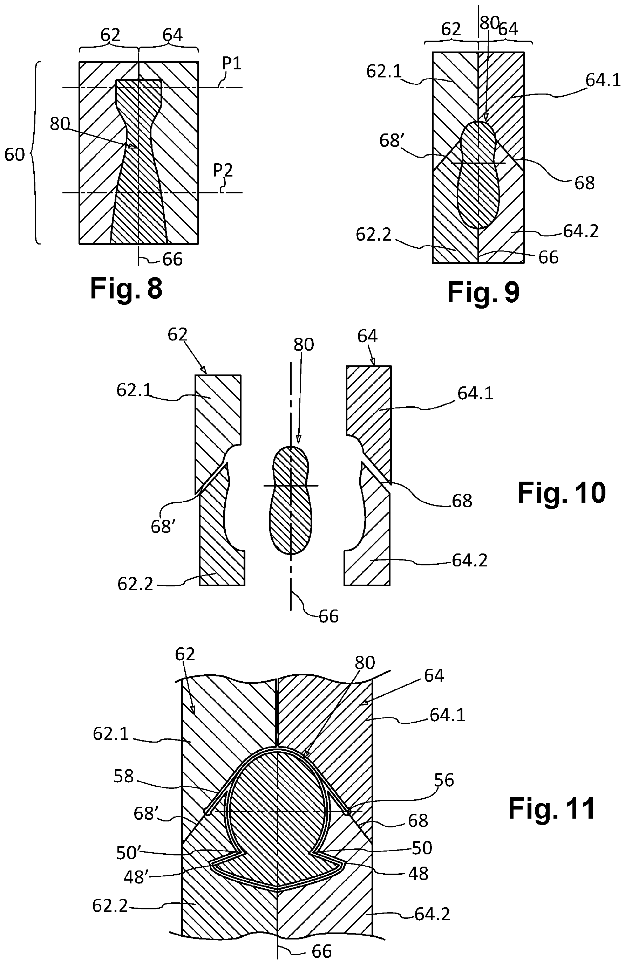

Chaque demi-moule 62, 64 comprend une première partie 62.1, 64.1 et une deuxième partie 62.2, 64.2 qui sont jointives, lors du moulage, au niveau de plans de joints secondaires 68, 68' au niveau desquels sont positionnées les empreintes des première et deuxième attaches 56, 58, comme illustré sur la figures 9 à 11. Ainsi, la partie supérieure tubulaire 38 et les première et deuxième attaches 56, 58 sont réalisées en une seule opération de manière à former une unique pièce.

Les premier et deuxième demi-moules 62, 64 sont positionnés autour du noyau 80 lorsqu'ils sont jointifs lors du moulage. Les premier et deuxième demi-moules 62, 64 ainsi que le noyau 80 comprennent des formes permettant d'obtenir une partie supérieure tubulaire 38 d'une sur-chaussure qui présente, d'au moins un côté d'un plan médian vertical PMV, depuis la génératrice avant, de l'avant vers l'arrière, en suivant le pourtour de la partie supérieure tubulaire 38, une première ligne de pliage 48 formant un angle saillant et une deuxième ligne de pliage 50 formant un angle rentrant.

Les formes de la partie supérieure tubulaire 38 précédemment décrites permettent d'obtenir un moule simple sans contredépouille, avec une ouverture en deux temps. Les plans de joint secondaires 68, 68' permettent de pouvoir démouler les première et deuxième attaches.

## Revendications

1. Sur-chaussure comprenant une semelle (32), une tige (34) qui présente une partie supérieure tubulaire (38), configurée pour envelopper une partie basse d'une jambe et pour occuper une première position déployée dans laquelle la partie supérieure tubulaire (38) présente une section élargie et une deuxième position resserrée dans laquelle la partie supérieure tubulaire (38) présente une section réduite, ladite sur-chaussure comprenant également au moins un système de serrage (54) configuré pour maintenir la partie supérieure tubulaire (38) dans la position resserrée, **caractérisée en ce que** chaque système de serrage (54) comprend une première attache (56) présentant une première extrémité (56.1) reliée à l'une des parties latérales droite ou gauche (46, 46') de la partie supérieure tubulaire (38) et une deuxième attache (58) présentant une première extrémité (58.1) reliée à l'autre partie latérale gauche ou droite (46, 46') de la partie supérieure tubulaire (38), les première et deuxième attaches (56, 58) étant configurées pour occuper un état attaché dans lequel elles sont reliées et maintiennent la sur-chaussure (30) dans la position resserrée et un état détaché dans lequel elles ne sont pas reliées, les première et deuxième attaches (56, 58) étant configurées pour que leurs zones de liaison soient positionnées, à l'état attaché, au niveau d'au moins l'une des parties avant et arrière (44, 44') de la tige (34).

2. Sur-chaussure selon la revendication 1, **caractérisée en ce que** les première et deuxième attaches (56, 58) de chaque système de serrage (54) sont réalisées d'un seul tenant avec la partie supérieure tubulaire (38), les première et deuxième attaches (56, 58) de chaque système de serrage (54) ainsi que la partie supérieure tubulaire (38) étant réalisées dans la même matière, lors de la même opération de moulage.

3. Sur-chaussure selon la revendication 1 ou 2, **caractérisée en ce que** la première attache (56) comprend au moins un trou (56.2) de forme oblongue avec une grande dimension orientée selon la longueur de la première attache (56) et **en ce que** la deuxième attache (58) comprend, de la première extrémité (58.1) jusqu'à la deuxième extrémité, un corps (58.2), une section réduite (58.3) et une tête (58.4), la section réduite (58.3) présentant une section inférieure ou égale à la plus petite section des trous (56.2) de la première attache (56), la tête (58.4) ayant une largeur supérieure à la plus petite section des trous (56.2) de la première attache (56).

4. Sur-chaussure selon la revendication précédente, **caractérisée en ce que** la tête (58.4) présente un débordement de part et d'autre de la section réduite (58.3) avec une dimension supérieure ou égale à 5 mm.

5. Sur-chaussure selon l'une des revendications précédentes, **caractérisée en ce que** la partie supérieure tubulaire (38) comprend au moins deux lignes de pliage préformées (48, 50), une première ligne de pliage (48) formant un angle saillant et une deuxième ligne de pliage (50) formant un angle rentrant, les première et deuxième lignes de pliage (48, 50) s'étendant d'une extrémité haute (38.1) de la partie supérieure tubulaire (38) sur toute la hauteur de la partie supérieure tubulaire (38), les première et deuxième lignes de pliage (48, 50) délimitant une sur-longueur (52) permettant à la sur-chaussure (30) d'occuper alternativement la position déployée et la position resserrée.

6. Sur-chaussure selon la revendication précédente, **caractérisée en ce que** les première et deuxième lignes de pliage (48, 50) sont positionnées dans la moitié avant de la partie supérieure tubulaire (38) et **en ce que** la partie supérieure tubulaire (38) comprend, depuis une génératrice avant, de l'avant vers l'arrière, en suivant le pourtour de la partie supérieure tubulaire (38), une première ligne de pliage (48) formant un angle saillant et une deuxième ligne de pliage (50) formant un angle rentrant.

7. Sur-chaussure selon la revendication 5 ou 6, **caractérisée en ce qu'**elle comprend, depuis une génératrice avant, de l'avant vers l'arrière, en suivant le pourtour de la partie supérieure tubulaire (38), une première ligne de pliage droite (48) formant un angle saillant et une deuxième ligne de pliage droite (50) formant un angle rentrant positionnées d'un premier côté d'un plan médian vertical (PMV) ainsi qu'une première ligne de pliage gauche (48') formant un angle saillant et une deuxième ligne de pliage gauche (50') formant un angle rentrant positionnées d'un deuxième côté du plan médian vertical (PMV).

8. Sur-chaussure selon la revendication précédente, **caractérisée en ce que** la tige (34) est sensiblement symétrique par rapport au plan médian vertical (PMV).

9. Sur-chaussure selon la revendication précédente, **caractérisée en ce que** chaque sur-longueur droite ou gauche (52, 52') forme, dans un état non déformé, un angle (a) avec le plan médian vertical (PMV) inférieur ou égal à 90°.

10. Sur-chaussure selon la revendication précédente, **caractérisée en ce que** l'angle (a) formé entre chaque sur-longueur droite ou gauche (52, 52') et le plan médian vertical (PMV) dans un état non déformé est supérieur à 45°.

11. Sur-chaussure selon l'une des revendications 5 à 8, **caractérisée en ce qu'**une partie avant (44) située entre les premières lignes de pliage droite et gauche (48, 48') comporte une épaisseur supérieure de 20% à 100% à celle du reste de la tige (34).

12. Procédé de fabrication d'une sur-chaussure selon l'une des revendications précédentes, **caractérisé en ce qu'**il comprend une étape de moulage par injection dans un moule (60) comprenant au moins un noyau (80) conformé comme l'intérieur de la sur-chaussure à réaliser ainsi que des premier et deuxième demi-moules (62, 64) plaqués l'un contre l'autre au niveau d'un plan de joint principal (66) correspondant à un plan médian vertical (PMV) de la sur-chaussure (30), positionnés autour du noyau (80), chaque demi-moule (62, 64) comprenant une première partie (62.1, 64.1) et une deuxième partie (62.2, 64.2) qui sont jointives lors du moulage au niveau de plans de joints secondaires (68, 68') au niveau desquels sont positionnées des empreintes des première et deuxième attaches (56, 58) de chaque système de serrage (54).

13. Procédé de fabrication d'une sur-chaussure selon la revendication précédente, **caractérisé en ce que** les premier et deuxième demi-moules (62, 64) ainsi que le noyau (80) comprennent des formes permettant d'obtenir une partie supérieure tubulaire (38) d'une sur-chaussure qui présente, d'au moins un côté d'un plan médian vertical (PMV), depuis une génératrice avant, de l'avant vers l'arrière, en suivant le pourtour de la partie supérieure tubulaire (38), une première ligne de pliage (48) formant un angle saillant et une deuxième ligne de pliage (50) formant un angle rentrant.
